# EUROPÄISCHE PATENTSCHRIFT

(11) **EP 3 686 034 B1**
(45) Veröffentlichungstag und Bekanntmachung des Hinweises auf die Patenterteilung: **20.10.2021**
(21) Anmeldenummer: 19207349.2
(22) Anmeldetag: 06.11.2019
(51) Int. Cl.: B60C 11/03, B60C 11/13, B60C 11/01

(54) **FAHRZEUGLUFTREIFEN**
PNEUMATIC TYRE
PNEUMATIQUES DE VÉHICULE

(30) Priorität: 24.01.2019 DE 102019200901
(43) Veröffentlichungstag der Anmeldung: 29.07.2020
(73) Patentinhaber: Continental Reifen Deutschland GmbH, 30165 Hannover (DE)
(72) Erfinder: Fischer, Markus, 30419 Hannover (DE); Özüduru, Ahmet, 30419 Hannover (DE); Pagac, Lubomir, 30419 Hannover (DE)
(74) Vertreter: Continental Corporation

(56) Entgegenhaltungen:
- EP-A1- 2 239 153
- EP-A1- 2 835 274
- EP-A1- 3 037 282
- EP-A1- 3 300 925
- EP-A2- 0 870 630
- DE-A1-102010 060 255
- JP-A- 2012 171 577
- US-A1- 2004 020 577

## Beschreibung

Die Erfindung betrifft einen Fahrzeugluftreifen mit Seitenwänden und mit einem profilierten, laufrichtungsgebunden gestalteten Laufstreifen, derart, dass der Fahrzeugluftreifen mit einer bestimmten Abrollrichtung bei Vorwärtsfahrt am Fahrzeug zu montieren ist,
wobei der Laufstreifen innerhalb seiner Bodenaufstandsfläche zumindest eine durch Querrillen in Profilblöcke gegliederte, schulterseitige Profilblockreihe aufweist, welche außerhalb der Bodenaufstandsfläche eine Schulterflanke besitzt, in welcher in Fortsetzung der Querrillen und in radialer Richtung verlaufend Querrillenausläufe verlaufen, deren Tiefe in Richtung zur Seitenwand abnimmt, wobei an die Querrillenausläufe über je eine Knickstelle Flankenrillen anschließen, welche sich bei am Fahrzeug montiertem Fahrzeugluftreifen gegen die Abrollrichtung bei Vorwärtsfahrt erstrecken.

Es ist üblich, Fahrzeugluftreifen mit Laufstreifen zu versehen, bei welchen schulterseitig verlaufende Querrillen über den seitlichen Rand der Bodenaufstandsfläche hinaus, in den sogenannten Off-Shoulder-Bereich, hinein verlaufen.

Ein Fahrzeugluftreifen eingangs genannter Art ist aus der EP 2 835 274 A1 bekannt. Dieser Fahrzeugluftreifen weist einen Laufstreifen mit einem laufrichtungsgebunden gestalteten Profil mit Querrillen auf, die sich über die Bodenaufstandsfläche hinaus bis zu einer Stützfläche erstrecken, wobei sich an der Stützfläche ein verlängerter Abschnitt jeder Querrille in Drehrichtung nach hinten biegt. Diese Ausgestaltung der Off-Shoulder-Bereiche soll die Traktionseigenschaften des Reifens in tiefem Schnee verbessern.

Ein weiterer Fahrzeugluftreifen mit Querrillenausläufen ist beispielsweise aus der DE 10 2017 206 383 A1 bekannt. Die schulterseitigen Querrillen dieses Reifens laufen außerhalb der Bodenaufstandsfläche unter kontinuierlicher Verringerung ihrer Tiefe als flächige Vertiefungen aus, die, in Umfangsrichtung betrachtet, eine Breite aufweisen, welche um mindestens 40 % größer ist als die Breite der Querrillen innerhalb ihres Verlaufes in der Bodenaufstandsfläche. Durch die damit verbundene Vergrößerung des Querrillenquerschnittes im schulterseitigen Auslaufbereich der Querrillen kann bei Kurvenfahrt auf nasser Fahrbahn, das heißt unter Verlagerung der Bodenaufstandsfläche zur Kurvenaußenseite, Wasser besonders effektiv in den Off-Shoulder-Bereich abgeleitet werden. Weitere Fahrzeugluftreifen mit Laufstreifen, bei welchen schulterseitige Querrillen über die Bodenaufstandsfläche hinaus in die Off-Shoulder-Bereiche hinein verlaufen, sind aus der EP 3 124 290 A1 und der DE 10 2015 219 434 A1 bekannt.

Darüber hinaus ist es bekannt, in den Off-Shoulder-Bereichen des Laufstreifens Vertiefungen zur Erhöhung der Traktion beim Fahren auf weichem Untergrund, beispielsweise auf Schnee, Schneematsch oder matschig/erdigen oder unbefestigten Straßen, vorzusehen. Beim Fahren auf tieferem, losem Schnee kommt der Ausgestaltung der Off-Shoulder-Bereiche hinsichtlich des Schneegriffs und der Traktionseigenschaften des Reifens größere Bedeutung zu. Insbesondere auf losem Schnee sind die bislang üblichen und in die Off-Shoulder-Bereiche hinein verlaufenden Querrillenausläufe nicht in der Lage, einen nennenswerten Betrag zur Verbesserung der Traktion zu leisten.

Der Erfindung liegt die Aufgabe zugrunde, bei einem Reifen der eingangs genannter Art die Griff- und Traktionseigenschaften auf mit losem, tiefem Schnee bedecktem Untergrund durch eine entsprechende Gestaltung der Off-Shoulder-Bereiche deutlich zu verbessern.

Gelöst wird die gestellte Aufgabe erfindungsgemäß dadurch, dass die Flankenrillen unter einem stumpfen Winkel zu den Querrillenausläufen anschließen und zur Schulterflankenaußenseite verlaufende Rillenwände aufweisen, von welchen die eine vom Laufstreifen weiter entfernt befindliche Rillenwand unter einem kleineren Winkel zu einer Senkrechten auf die Schulterflankenaußenseite verläuft als die andere Rillenwand.

Bei Vorwärtsfahrt auf mit tiefem Schnee bedecktem Untergrund sammelt sich Schnee in den Flankenrillen an, wobei die "flacher" verlaufenden Rillenwände das Ansammeln von Schnee in den Flankenrillen unterstützen und die "steiler" verlaufenden Rillenwände für ein Verdichten des Schnees sorgen. Der verdichtete Schnee unterstützt und begünstigt das Entstehen des Effektes der Schnee-Schnee -Reibung, welche gute Griff- und Traktionseigenschaften in den Off-Shoulder-Bereichen ermöglicht.

Der erwünschte Effekt des Verdichtens von Schnee ist besonders ausgeprägt, wenn der Winkel der unter dem kleineren Winkel zu einer Senkrechten auf die Schulterflankenaußenseite verlaufenden Rillenwand 4° bis 15°, insbesondere bis zu 10°, beträgt und wenn ferner der Winkel der unter dem größeren Winkel zu einer Senkrechten auf die Schulterflankenaußenseite verlaufenden Rillenwand 20° bis 60°, insbesondere 30° bis 50°, beträgt. An der somit sehr "steilen" Rillenwand wird der über die relativ "flache" Rillenwand hineinrutschende lose Schnee besonders gut verdichtet.

Vorzugsweise bei Vorwärtsfahrt sollen die Traktionseigenschaften auf tiefem losem Schnee besonders gut unterstützt werden. In diesem Zusammenhang ist es vorteilhaft, wenn der stumpfe Winkel zwischen den Querrillenausläufen und den Flankenrillen 100° bis 140°, insbesondere bis 130°, beträgt, wobei die Flankenrillen in Draufsicht auf die Schulterflanke vorzugsweise in Richtung zur Seitenwand geneigt sind.

Der Effekt des Verdichtens des Schnees und des Auftretens der Schnee-Schnee-Reibung wird ferner dann begünstigt, wenn die Flankenrillen zwischen den Innenecken der Knickstellen und ihren Enden eine Länge von 15,0 mm bis 25,0 mm aufweisen und wenn ferner die Flankenrillen zumindest über den Großteil ihrer Erstreckung eine Breite von 1,5 mm bis 3,0 mm aufweisen. Bevorzugt ist dabei eine Ausführung, bei der die Breite der Flankenrillen zumindest über den Großteil ihrer Erstreckung von den Knickstellen bei den Querrillenausläufen ausgehend in Richtung zu den Enden der Flankenrillen geringer wird.

Für den Effekt des Verdichtens von in die Flankenrillen eindringendem Schnee ist es weiters vorteilhaft, wenn die Flankenrillen eine Tiefe von 0,5 mm bis 2,5 mm aufweisen, wobei vorzugsweise diese Tiefe von den Knickstellen bei den Querrillenausläufen ausgehend in Richtung zu den Enden der Flankenrillen geringer wird.

Bei einer bevorzugten Ausführung sind die Flankenrillen an ihren Enden geschlossen ausgeführt. Bei einer weiteren, ebenfalls bevorzugten Ausführung schließen an die Flankenrillen über Knickstellen zusätzlich Rillenabschnitte an, welche in radialer Richtung verlaufen. An diese zusätzlichen Rillenabschnitte kann gemäß einer weiteren bevorzugten Ausgestaltung über je eine Knickstelle jeweils ein weiterer Rillenabschnitt anschließen, welcher entgegengesetzt zu den Flankenrillen orientiert verläuft. Die zusätzlichen und die weiteren Rillenabschnitte weisen jeweils insbesondere eine Länge von 3,0 mm bis 7,0 mm auf. Durch diese relativ kurzen Rillenabschnitte werden in den Off-Shoulder-Bereichen oberflächlich zusätzliche Griffkanten zur Verfügung gestellt.

Weitere, zusätzliche Griffkanten zur Verbesserung der Traktion auf tiefem, losem Schnee sind bei einer Ausführung vorhanden, bei welcher in Verlängerung der Flankenrillen jeweils ein Einschnitt mit einer Breite und mit einer Tiefe von 0,5 mm bis 1,3 mm verläuft. Vorzugsweise verbindet dieser Einschnitt das Ende eines entgegengesetzt zur Flankenrille verlaufenden Rillenabschnittes mit dem in Umfangsrichtung folgenden Außeneck der Knickstelle zwischen der Flankenrille und dem an diese anschließenden Rillenabschnitt.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Schrägansicht einer schulterseitigen Profilblockreihe eines Laufstreifens eines Fahrzeugluftreifens mit einer Ausführungsvariante der Erfindung,
Fig. 2a einen Schnitt entlang der Linie IIa-IIa der Fig. 1,
Fig. 3 in einer zu Fig. 1 analogen Darstellung eine weitere Ausführungsvariante der Erfindung,

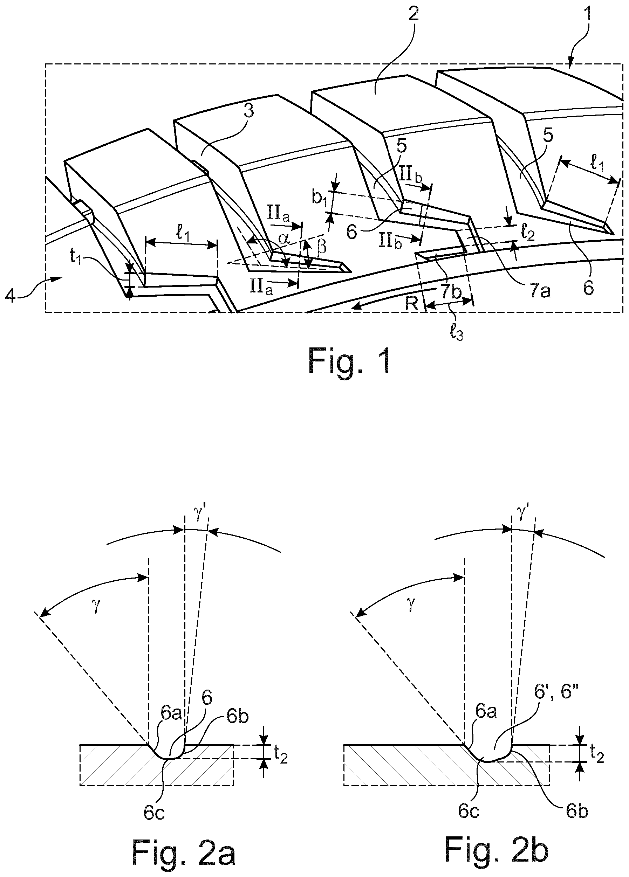

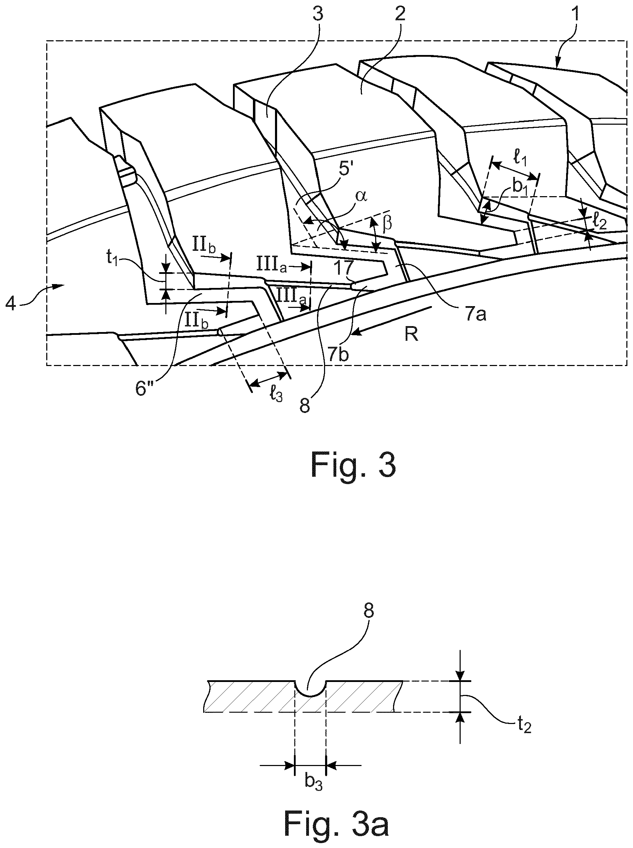

Fig. 2b einen Schnitt entlang der Linie IIb-IIb der Fig. 1 und der Fig. 3 und
Fig. 3a einen Schnitt entlang der Linie IIIa-IIIa der Fig. 3.

Gemäß der Erfindung ausgeführte Fahrzeugluftreifen sind für den Einsatz unter winterlichen Fahrbedingungen vorgesehene bzw. geeignete Fahrzeugluftreifen beliebigen Typs in Radialbauart, insbesondere Reifen für Personenkraftwagen, Vans, Light-Trucks, SUVs oder Pick-Ups. Erfindungsgemäß ausgeführte Fahrzeugluftreifen weisen ferner ein laufrichtungsgebunden gestaltetes Laufstreifenprofil auf, die Reifen sind daher gemäß ihrer vorgesehenen Abrollrichtung bei Vorwärtsfahrt am Fahrzeug zu montieren. Laufrichtungsgebunden gestaltete Laufstreifenprofile weisen beispielsweise "gepfeilt" verlaufende Querrillen oder Querrillen auf, die über einen Großteil der Laufstreifenbreite V-förmig verlaufend ausgebildet sind. Derartige Ausgestaltungen sind in einer Vielzahl von Ausführungsvarianten bekannt.

Fig. 1 und Fig. 3 zeigen jeweils eine Schrägansicht eines Umfangsabschnittes einer schulterseitigen Profilblockreihe 1 eines Laufstreifens eines Fahrzeugluftreifens. Die Profilblockreihe 1 setzt sich in Umfangsrichtung des Fahrzeugluftreifens aus einer Vielzahl von Profilblöcken 2 zusammen, die von einander jeweils durch eine Querrille 3 getrennt sind. Der seitliche Rand der Bodenaufstandsfläche des Laufstreifens ist jeweils durch eine gestrichelte Linie angedeutet. Die Bodenaufstandsfläche entspricht beispielsweise bei einem Reifen für Personenkraftwagen dem statisch ermittelten Footprint gemäß ETRTO-Standards (Last bei 70 % der maximalen Tragfähigkeit bei einem Innendruck von 85 % nach ETRTO-Norm). Die schulterseitige Profilblockreihe 1 ist außerhalb der Bodenaufstandsfläche mit einer zu einer nicht gezeigten Seitenwand des Reifens verlaufenden Schulterflanke 4, welche im Wesentlichen in radialer Richtung orientiert ist und bei einer seitlichen Sicht auf den Reifen kreisringförmig - durch Querrillenausläufe 5, 5' der Querrillen 3 unterbrochen - den Reifen umläuft, versehen. Die Abrollrichtung des Reifens bei Vorwärtsfahrt ist jeweils durch einen Pfeil R gekennzeichnet.

Die Querrillenausläufe 5, 5' verlaufen in Fortsetzung der Querrillen 3 und weisen eine sich verringernde Tiefe auf, sodass am Ende der Querrillenausläufe 5, 5'die Tiefe t₁ 1,5 mm bis 2,5 mm beträgt. Die Breite der Querrillenausläufe 5 (Fig. 1) entspricht der Breite der Querrillen 3 am Rand der Bodenaufstandsfläche, die Breite der Querrillenausläufe 5' (Fig. 3) wird in Richtung ihrer Enden größer.

An den Enden der Querrillenausläufe 5, 5' schließen über Knickstellen und gegen die Abrollrichtung bei Vorwärtsfahrt (Pfeile R) gerichtet Flankenrillen 6, 6' (Fig. 1) und 6" (Fig. 2) an, welche unter einem stumpfen Winkel α von 100° bis 140°, insbesondere bis 130°, zu den Querrillenausläufen 5, 5' verlaufen, wobei der Winkel α der Winkel zwischen den Mittellinien der betreffenden Rillen 5, 5', 6, 6' und 6"ist. Die Flankenrillen 6, 6'und 6" verlaufen somit an der Schulterflanke 4 nahezu in Umfangsrichtung und bevorzugt derart, dass sie in Richtung zur Seitenwand geneigt sind und auf diese Weise zur Umfangsrichtung unter einem Winkel β von vorzugsweise mindesten 5° verlaufen. Die Flankenrillen 6, 6'und 6" weisen ferner eine Länge l₁ von 15,0 mm bis 25,0 mm auf, die vom Inneneck der Knickstellen ausgehend ermittelt wird.

Die Flankenrillen 6, 6'und 6" weisen an der Außenseite der Schulterflanke 4 eine Breite b₁ auf, die sich zwischen der Knickstelle zum jeweiligen Querrillenauslauf 5, 5' und ihrem Ende kontinuierlich verringert und über den Großteil des Verlaufes der Flankenrillen 6, 6'und 6" 1,5 mm bis 3,0 mm beträgt. Die Flankenrillen 6, 6'und 6" weisen ferner eine Tiefe t₂ (Fig. 2a, 2b) auf, die sich ausgehend von der Tiefe t₁ der Querrillenausläufe 5, 5' an der Knickstelle bis zu ihrem Ende verringert und hier mindestens 0,5 mm beträgt.

Die Flankenrille 6 endet an der Schulterflanke 5 als "geschlossene" Rille, hingegen schließen an die Flankenrillen 6'und 6" über weitere Knickstellen zusätzliche Rillenabschnitte 7a, 7b an, wobei die Rillenabschnitte 7a im Wesentlichen in radialer Richtung verlaufen und die Rillenabschnitte 7b in Umfangsrichtung, jedoch entgegengesetzt zu den Flankenrillen 6', 6" orientiert sind. Die Rillenabschnitte 7a, 7b sind seicht, ihre Tiefe entspricht höchsten der geringsten Tiefe der Flankenrillen 6'und 6" ihre Erstreckungslängen l₂ (von Inneneck zu Inneneck) und l₃ (vom Inneneck zum Ende) betragen 2,0 mm bis 7,0 mm.

Wie die Schnittdarstellungen in Fig. 2a und 2b zeigen weist jede Flankenrille 6, 6'und 6" einen sich zur Außenseite der Schulterflanke 5 verbreiternden Querschnitt, einen Rillenboden 6c und zur Außenseite der Schulterflanke 5 verlaufende Rillenwände 6a, 6b auf, wobei die Rillenwand 6b jeweils jene ist, welche die jeweilige Flankenrille 6, 6'und 6" in Richtung zur nicht dargestellten Seitenwand begrenzt. Die Rillenwand 6a verläuft unter einem Winkel γ zu einer Senkrechten auf die Außenseite der Schulterflanke 5 von 20° bis 60°, insbesondere 30° bis 50, die Rillenwand 6b verläuft zu einer Senkrechten auf die Außenseite der Schulterflanke unter einem Winkel γ' von 4° bis 15°, insbesondere bis 10°. Bei Vorwärtsfahrt in tieferem Schnee wirkt somit die Rillenwand 6b als Schnee verdichtende "Kante", sodass in den Flankenrillen 6, 6'und 6" sich ansammelnder und verdichtender Schnee den Effekt der Schnee-Schnee-Reibung gut unterstützt.

Bei der in Fig. 1 gezeigten Ausführung wechselt in Umfangsrichtung jeweils eine Flankenrille 6 mit einer Flankenrille 6' ab.

Bei der in Fig. 3 gezeigten Ausführungsvariante sind an der Schulterflanke 4 ausschließlich Flankenrillen 6" vorgesehen. Die zusätzlichen Rillenabschnitte 7b weisen ferner jeweils ein in Draufsicht V- oder pfeilspitzenförmiges Ende 17 auf. Die Enden 17 sind mit den in Umfangsrichtung folgenden Außenecken der Knickstellen zwischen den Rillenabschnitten 7a und den Flankenrillen 6" jeweils durch einen Einschnitt 8 verbunden. Die Einschnitte 8 verlaufen gerade, im Wesentlichen parallel zu den bzw. in Fortsetzung der Flankenrillen 6", weisen eine Breite b₂ an der Außenseite der Schulterflanke 4 von 0,5 mm bis 1,3 mm und eine insbesondere konstante Tiefe t₃ von ebenfalls 0,5 mm bis 1,3 mm auf, wie in Fig.

3a gezeigt. Der Querschnitt der Einschnitte 8 ist gerundet. Die Einschnitte 8 stellen zusätzliche Griffkanten zur Verbesserung der Traktion auf tiefem Schnee zur Verfügung.

### Bezugszeichenliste

- 1: Profilblockreihe
- 2: Profilblock
- 3: Querrille
- 4: Schulterflanke
- 5, 5': Querrillenauslauf
- 6, 6', 6": Flankenrille
- 6a, 6b: Rillenwand
- 6c: Rillenboden
- 7a, 7b: Rillenabschnitt
- 8: Einschnitt
- 17: Ende
- b₁, b₂: Breite
- t₁, t₂, t₃: Tiefe
- l₁, l₂, l₃: Länge
- α, β, γ, γ': Winkel

## Patentansprüche

1. Fahrzeugluftreifen mit Seitenwänden und mit einem profilierten, laufrichtungsgebunden gestalteten Laufstreifen, derart, dass der Fahrzeugluftreifen mit einer bestimmten Abrollrichtung (R) bei Vorwärtsfahrt am Fahrzeug zu montieren ist,
wobei der Laufstreifen innerhalb seiner Bodenaufstandsfläche zumindest eine durch Querrillen (3) in Profilblöcke (2) gegliederte, schulterseitige Profilblockreihe (1) aufweist, welche außerhalb der Bodenaufstandsfläche eine Schulterflanke (4) besitzt, in welcher in Fortsetzung der Querrillen (3) und in radialer Richtung verlaufend Querrillenausläufe (5, 5') verlaufen, deren Tiefe in Richtung zur Seitenwand abnimmt, wobei an die Querrillenausläufe (5, 5') über je eine Knickstelle Flankenrillen (6, 6', 6") anschließen, welche sich bei am Fahrzeug montiertem Fahrzeugluftreifen gegen die Abrollrichtung (R) bei Vorwärtsfahrt erstrecken,
**dadurch gekennzeichnet,**
**dass** die Flankenrillen (6, 6', 6") unter einem stumpfen Winkel (α) zu den Querrillenausläufen (5, 5') anschließen und zur Schulterflankenaußenseite verlaufende Rillenwände (6a, 6b) aufweisen, von welchen die eine, vom Laufstreifen weiter entfernt befindliche Rillenwand (6b) unter einem kleineren Winkel (γ') zu einer Senkrechten auf die Schulterflankenaußenseite verläuft als die andere Rillenwand (6a).

2. Fahrzeugluftreifen nach Anspruch 1, **dadurch gekennzeichnet, dass** der Winkel (γ') der unter dem kleineren Winkel zu einer Senkrechten auf die Schulterflankenaußenseite verlaufenden Rillenwand (6b) 4° bis 15°, insbesondere bis zu 10°, beträgt.

3. Fahrzeugluftreifen nach Anspruch 1 oder 2, **dadurch gekennzeichnet, dass** der Winkel (γ) der unter dem größeren Winkel zu einer Senkrechten auf die Schulterflankenaußenseite verlaufenden Rillenwand (6a) 20° bis 60°, insbesondere 30° bis 50°, beträgt.

4. Fahrzeugluftreifen nach einem der Ansprüche 1 bis 3, **dadurch gekennzeichnet, dass** der stumpfe Winkel (α) zwischen den Querrillenausläufen (5, 5') und den Flankenrillen (6, 6', 6") 100° bis 140°, insbesondere bis 130°, beträgt, wobei die Flankenrillen (6, 6', 6") in Draufsicht auf die Schulterflanke (4) vorzugsweise in Richtung zur Seitenwand geneigt sind.

5. Fahrzeugluftreifen nach einem der Ansprüche 1 bis 4, **dadurch gekennzeichnet, dass** die Flankenrillen (6, 6', 6") zwischen den Innenecken der Knickstellen und ihren Enden eine Länge (l₁) von 15,0 mm bis 25, 0 mm aufweisen.

6. Fahrzeugluftreifen nach einem der Ansprüche 1 bis 5, **dadurch gekennzeichnet, dass** die Flankenrillen (6, 6', 6") zumindest über den Großteil ihrer Erstreckung eine Breite (b₁) von 1,5 mm bis 3,0 mm aufweisen.

7. Fahrzeugluftreifen nach einem der Ansprüche 1 bis 6, **dadurch gekennzeichnet, dass** die Flankenrillen (6, 6', 6") zumindest über den Großteil ihrer Erstreckung eine Breite (b₁) aufweisen, die von den Knickstellen zu den Querrillenausläufen (5, 5') ausgehend in Richtung zu ihren Enden geringer wird.

8. Fahrzeugluftreifen nach einem der Ansprüche 1 bis 7, **dadurch gekennzeichnet, dass** die Flankenrillen (6, 6', 6") eine Tiefe (t₂) von 0,5 mm bis 2,5 mm aufweisen.

9. Fahrzeugluftreifen nach einem der Ansprüche 1 bis 8, **dadurch gekennzeichnet, dass** die Flankenrillen (6, 6', 6") eine Tiefe (t₂) aufweisen, die von der Knickstellen zu den Querrillenausläufen (5, 5') ausgehend in Richtung zu ihren Enden geringer wird.

10. Fahrzeugluftreifen nach einem der Ansprüche 1 bis 9, **dadurch gekennzeichnet, dass** an die Flankenrillen (6', 6") über Knickstellen zusätzlich Rillenabschnitte (7a) anschließen, welche in radialer Richtung verlaufen.

11. Fahrzeugluftreifen nach Anspruch 10, **dadurch gekennzeichnet, dass** an die zusätzlichen Rillenabschnitte (7a) über je eine Knickstelle ein weiterer Rillenabschnitt (7b) anschließt, welcher entgegengesetzt zu den Flankenrillen (6', 6") verläuft.

12. Fahrzeugluftreifen nach Anspruch 10 oder 11, **dadurch gekennzeichnet, dass** die zusätzlichen Rillenabschnitte (7a) und die weiteren Rillenabschnitte (7b) jeweils eine Länge (l₂, l₃) von 3,0 mm bis 7,0 mm aufweisen.

13. Fahrzeugluftreifen nach einem der Ansprüche 1 bis 12, **dadurch gekennzeichnet, dass** in Verlängerung der Flankenrillen (6") jeweils ein Einschnitt (8) mit einer Breite (b₃) und einer Tiefe (t₂) von 0,5 mm bis 1,3 mm verläuft.

14. Fahrzeugluftreifen nach Anspruch 13, **dadurch gekennzeichnet, dass** der Einschnitt (8) das Ende eines entgegengesetzt zur Flankenrille (6") verlaufenden Rillenabschnittes (7b) mit dem in Umfangsrichtung folgenden Außeneck der Knickstelle zwischen der Flankenrille (6") und dem an diese anschließenden Rillenabschnitt (7a) verbindet.

## Claims

1. Pneumatic vehicle tyre with sidewalls and with a profiled tread of a directional design such that the pneumatic vehicle tyre can be fitted on the vehicle with a specific rolling direction (R) during forward travel,
wherein the tread has within its ground contact area at least one shoulder-side row of tread bars (1), which is divided into tread bars (2) by transverse grooves (3) and has outside the ground contact area a shoulder flank (4), in which there extend as a continuation of the transverse grooves (3), and extending in the radial direction, transverse groove runouts (5, 5'), the depth of which decreases in the direction of the sidewall, wherein the transverse groove runouts (5, 5') are adjoined via a respective vertex point by flank grooves (6, 6', 6''), which extend counter to the rolling direction (R) during forward travel when the pneumatic vehicle tyre is fitted on the vehicle,
**characterized**
**in that** the flank grooves (6, 6', 6'') adjoin at an obtuse angle (α) to the transverse groove runouts (5, 5') and have groove walls (6a, 6b) which extend to the outer side of the shoulder flank, of which one groove wall (6b), located further away from the tread, extends to the outer side of the shoulder flank at a smaller angle (γ') to a perpendicular than the other groove wall (6a).

2. Pneumatic vehicle tyre according to Claim 1, **characterized in that** the angle (γ') of the groove wall (6b) extending to the outer side of the shoulder flank at the smaller angle to a perpendicular is 4° to 15°, in particular up to 10°.

3. Pneumatic vehicle tyre according to Claim 1 or 2, **characterized in that** the angle (γ) of the groove wall (6a) extending to the outer side of the shoulder flank at the greater angle to the perpendicular is 20° to 60°, in particular 30° to 50°.

4. Pneumatic vehicle tyre according to one of Claims 1 to 3, **characterized in that** the obtuse angle (α) between the transverse groove runouts (5, 5') and the flank grooves (6, 6', 6") is 100° to 140°, in particular up to 130°, wherein, in plan view of the shoulder flank (4), the flank grooves (6, 6', 6'') are preferably inclined in the direction of the sidewall.

5. Pneumatic vehicle tyre according to one of Claims 1 to 4, **characterized in that** the flank grooves (6, 6', 6") have between the inner corners of the vertex points and their ends a length (11) of 15.0 mm to 25.0 mm.

6. Pneumatic vehicle tyre according to one of Claims 1 to 5, **characterized in that** the flank grooves (6, 6', 6'') have, at least over the majority of their extent, a width (b₁) of 1.5 mm to 3.0 mm.

7. Pneumatic vehicle tyre according to one of Claims 1 to 6, **characterized in that** the flank grooves (6, 6', 6'') have, at least over the majority of their extent, a width (b₁) which becomes smaller in the direction of their ends, starting from the vertex points to the transverse groove runouts (5, 5').

8. Pneumatic vehicle tyre according to one of Claims 1 to 7, **characterized in** the flank grooves (6, 6', 6'') have a depth (t₂) of 0.5 mm to 2.5 mm.

9. Pneumatic vehicle tyre according to one of Claims 1 to 8, **characterized in that** the flank grooves (6, 6', 6'') have a depth (t₂) which becomes smaller in the direction of their ends, starting from the vertex points to the transverse groove runouts (5, 5').

10. Pneumatic vehicle tyre according to one of Claims 1 to 9, **characterized in that** the flank grooves (6', 6'') are additionally adjoined via vertex points by groove portions (7a) which extend in the radial direction.

11. Pneumatic vehicle tyre according to Claim 10, **characterized in that** the additional groove portions (7a) are adjoined via a respective vertex point by a further groove portion (7b), which runs oppositely to the flank grooves (6', 6'').

12. Pneumatic vehicle tyre according to Claim 10 or 11, **characterized in that** the additional groove portions (7a) and the further groove portions (7b) respectively have a length (l₂, l₃) of 3.0 mm to 7.0 mm.

13. Pneumatic vehicle tyre according to one of Claims 1 to 12, **characterized in that** a sipe (8) with a width (b₃) and a depth (t₂) of 0.5 mm to 1.3 mm respectively extends as an extension of the flank grooves (6").

14. Pneumatic vehicle tyre according to Claim 13, **characterized in that** the sipe (8) connects the end of a groove portion (7b) that extends oppositely to the flank groove (6'') to the circumferentially following outer corner of the vertex point between the flank groove (6'') and the groove portion (7a) adjoining the latter.

## Revendications

1. Pneumatique de véhicule muni de parois latérales et muni d'une bande de roulement profilée conçue directionnellement, de telle sorte que le pneumatique de véhicule doit être monté sur le véhicule avec une direction de roulement déterminée (R) en marche avant,
la bande de roulement comprenant dans sa surface de contact avec le sol au moins une série de blocs profilés côté épaulement (1), divisée par des rainures transversales (3) en blocs profilés (2), qui présente à l'extérieur de la surface de contact avec le sol un flanc d'épaulement (4), dans lequel des sorties de rainures transversales (5, 5') s'étendent dans le prolongement des rainures transversales (3) et en direction radiale, dont la profondeur diminue dans la direction de la paroi latérale, des rainures de flanc (6, 6', 6'') étant contiguës aux sorties de rainures transversales (5, 5') par l'intermédiaire à chaque fois d'un point d'inflexion, qui s'étendent à l'encontre de la direction de roulement (R) en marche avant lorsque le pneumatique de véhicule est monté sur le véhicule,
**caractérisé en ce que**
les rainures de flanc (6, 6', 6'') sont contiguës aux sorties de rainures transversales (5, 5') avec un angle obtus (α) et comprennent des parois de rainure (6a, 6b) s'étendant jusqu'au côté extérieur de flanc d'épaulement, parmi lesquelles la paroi de rainure (6b), plus éloignée de la bande de roulement, s'étend à un angle (γ') plus petit par rapport à une verticale sur le côté extérieur de flanc d'épaulement que l'autre paroi de rainure (6a).

2. Pneumatique de véhicule selon la revendication 1, **caractérisé en ce que** l'angle (γ') de la paroi de rainure (6b) s'étendant à l'angle plus petit par rapport à une verticale sur le côté extérieur de flanc d'épaulement est de 4° à 15°, notamment de jusqu'à 10°.

3. Pneumatique de véhicule selon la revendication 1 ou 2, **caractérisé en ce que** l'angle (γ) de la paroi de rainure (6a) s'étendant à l'angle plus grand par rapport à une verticale sur le côté extérieur de flanc d'épaulement est de 20° à 60°, notamment de 30° à 50°.

4. Pneumatique de véhicule selon l'une quelconque des revendications 1 à 3, **caractérisé en ce que** l'angle obtus (α) entre les sorties de rainures transversales (5, 5') et les rainures de flanc (6, 6', 6'') est de 100° à 140°, notamment de jusqu'à 130°, les rainures de flanc (6, 6', 6'') étant de préférence inclinées en direction de la paroi latérale en vue de dessus sur le flanc d'épaulement (4).

5. Pneumatique de véhicule selon l'une quelconque des revendications 1 à 4, **caractérisé en ce que** les rainures de flanc (6, 6', 6'') présentent entre les coins intérieurs des points d'inflexion et leurs extrémités une longueur (l₁) de 15,0 mm à 25,0 mm.

6. Pneumatique de véhicule selon l'une quelconque des revendications 1 à 5, **caractérisé en ce que** les rainures de flanc (6, 6', 6'') présentent au moins sur la majeure partie de leur étendue une largeur (b₁) de 1,5 mm à 3,0 mm.

7. Pneumatique de véhicule selon l'une quelconque des revendications 1 à 6, **caractérisé en ce que** les rainures de flanc (6, 6', 6'') présentent au moins sur la majeure partie de leur étendue une largeur (b₁) qui devient plus petite en direction de leurs extrémités à partir des points d'inflexion vers les sorties de rainures transversales (5, 5').

8. Pneumatique de véhicule selon l'une quelconque des revendications 1 à 7, **caractérisé en ce que** les rainures de flanc (6, 6', 6'') présentent une profondeur (t₂) de 0,5 mm à 2,5 mm.

9. Pneumatique de véhicule selon l'une quelconque des revendications 1 à 8, **caractérisé en ce que** les rainures de flanc (6, 6', 6'') présentent une profondeur (t₂) qui devient plus petite en direction de leurs extrémités à partir des points d'inflexion vers les sorties de rainures transversales (5, 5').

10. Pneumatique de véhicule selon l'une quelconque des revendications 1 à 9, **caractérisé en ce que** des sections de rainure (7a), qui s'étendent dans la direction radiale, sont additionnellement contiguës aux rainures de flanc (6', 6'') par l'intermédiaire de points d'inflexion.

11. Pneumatique de véhicule selon la revendication 10, **caractérisé en ce qu'**une section de rainure supplémentaire (7b), qui s'étend en sens inverse des rainures de flanc (6', 6''), est contiguë aux sections de rainure additionnelles (7a) par l'intermédiaire à chaque fois d'un point d'inflexion.

12. Pneumatique de véhicule selon la revendication 10 ou 11, **caractérisé en ce que** les sections de rainure additionnelles (7a) et les sections de rainure supplémentaires (7b) présentent à chaque fois une longueur (l₂, l₃) de 3,0 mm à 7,0 mm.

13. Pneumatique de véhicule selon l'une quelconque des revendications 1 à 12, **caractérisé en ce qu'**une entaille (8) ayant une largeur (b₃) et une profondeur (t₂) de 0,5 mm à 1,3 mm s'étend à chaque fois dans le prolongement des rainures de flanc (6").

14. Pneumatique de véhicule selon la revendication 13, **caractérisé en ce que** l'entaille (8) relie l'extrémité d'une section de rainure (7b) s'étendant en sens inverse de la rainure de flanc (6'') avec le coin extérieur suivant dans la direction circonférentielle du point d'inflexion entre la rainure de flanc (6'') et la section de rainure (7a) contiguë à celle-ci.
